# EUROPEAN PATENT APPLICATION

(11) **EP 1 903 472 A1**
(43) Date of publication of application: **26.03.2008**
(21) Application number: 07253211.2
(22) Date of filing: 15.08.2007
(51) Int. Cl.: G06K 7/10

(54) **Optical scanner including optics engine**

(30) Priority: 20.09.2006 US 533390
(71) Applicant: NCR Corporation, Dayton, Ohio 45479 (US)
(72) Inventor: Detwiler, Paul O., Lawrenceville, GA 30044 (US)
(74) Representative: Williamson, Brian

(57) **Abstract**

An optical scanner including an optics engine that is easily replaced. The scanner includes a scanner housing including a scanner housing aperture, pattern mirrors (18) in the housing, and an optics engine (14) including an engine housing insertable into the scanner housing aperture, a mirrored spinner (16) in the engine housing for directing a laser beam at the pattern mirrors and for receiving light reflected from an item from the pattern mirrors, a motor (26) in the engine housing for rotating the mirrored spinner, a laser (12) in the engine housing for producing the laser beam, a collector (20) in the engine housing between the laser and the mirrored spinner including an aperture through which the laser beam passes, wherein the collector receives the light reflected from the item from the mirrored spinner, and a detector (22) in the engine housing for receiving the light from the collector and converting the light into electrical signals.

## Description

Fixed position retail barcode scanners, especially bi-optic scanners, require sets of pattern forming mirrors that must be widely spaced in order to form wrap-around patterns required for efficient throughput. While the requirements for placement precision of these mirrors are not severe, their mounts and housings are often forced to be unnecessarily precise (and expensive) by the additional requirement that these housings position the scanner's active optics. Such active optics includes laser sources, scanning polygons and motors, collection optics, detectors and associated lenses and optical filters. These components are often smaller, and the pointing and alignment requirements are severe. The lasers have the longest distance between themselves and the scan zone, and the pointing requirements are stringent in order to have a coherent pattern. The collection optic, laser and detector must all be precisely aligned relative to one another in order to guarantee that collected light falls onto the detector.

It would be desirable to provide an optics engine for an optical scanner that combines the various active optics and associated electronics into one small, precise package.

An optical scanner including an optics engine is provided. The scanner includes a scanner housing including a scanner housing aperture, pattern mirrors in the housing, and an optics engine including an engine housing insertable into the scanner housing aperture, a mirrored spinner in the engine housing for directing a laser beam at the pattern mirrors and for receiving light reflected from an item from the pattern mirrors, a motor in the engine housing for rotating the mirrored spinner, a laser in the engine housing for producing the laser beam, a collector in the engine housing between the laser and the mirrored spinner including an aperture through which the laser beam passes, wherein the collector receives the light reflected from the item from the mirrored spinner, and a detector in the engine housing for receiving the light from the collector and converting the light into electrical signals.

Embodiments of the present invention will now be described, by way of example, with reference to the accompanying drawings, in which:
Fig. 1 is a block diagram of an optical scanner;
Fig. 2 is a perspective view of the optics engine;
Fig. 3 is a perspective view of the optics engine with the spinner removed;
Fig. 4 is a bottom view of scanner housing;
Fig. 5 is a bottom view of the scanner showing mounting features of the optics engine; and
Fig. 6 is a cross-section of the scanner illustrating placement of the optics engine.

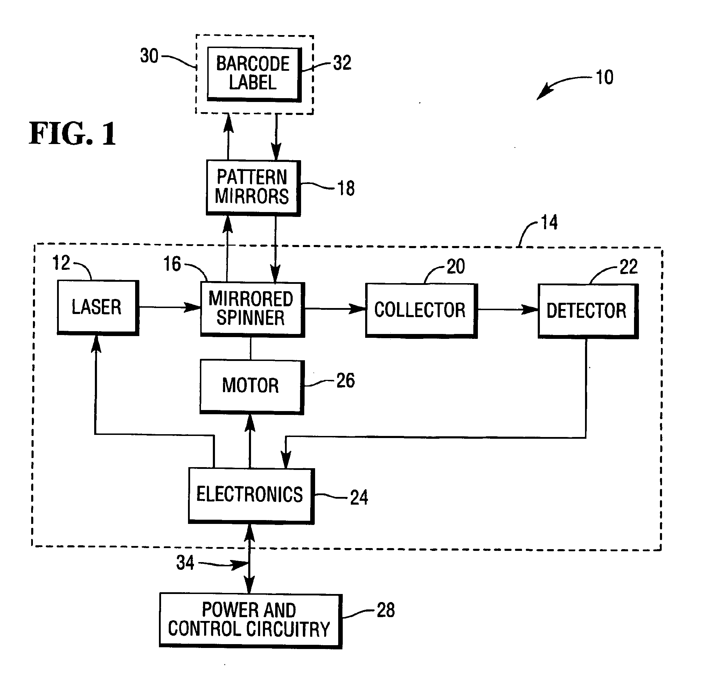

With reference to Fig. 1, an example embodiment of optical scanner 10 includes optics engine 14, pattern mirrors 18, and power and control circuitry 28.

Optics engine 14 includes serviceable electrical components, components that are more likely to require replacing at some point in the scanner's operating lifetime than other components. By locating these components within optics engine 14 and by making optics engine 14 easy to remove, service time on scanner 10 is minimized. If a component fails, a replacement optics engine 14 is installed to quickly return scanner 10 to full operation. The optics engine 14 with the failed component may be repaired for the next component failure.

Optics engine 14 also includes optical components that require alignment. By locating these components within optics engine 14, alignment of these components may occur outside of scanner 10.

In detail, optics engine 14 includes one or more lasers 12, mirrored spinner 16, one or more collectors 20, one or more detectors 22, electronics 24, and motor 26.

Laser 12 produces laser beams.

Mirrored spinner 16 directs the laser beams to pattern mirrors 18 to produce a scan pattern, and receives reflected light from item 30 from pattern mirrors 18. Motor 26 rotates mirrored spinner 16.

Collector 20 collects the reflected light from mirrored spinner 16 and directs it towards detector 22.

Detector 22 converts the reflected light into electrical signals.

Electronics 24 provides drive circuitry for laser 12 and motor 26, and amplifies and filters the electrical signals from detector 22.

Pattern mirrors 18 direct the laser beam towards bar code label 32 and direct the reflected light to mirrored spinner 16.

Power and control circuitry 28 controls operation of scanner 10 and additionally processes the processed electrical signals from electronics 24 to obtain information encoded in bar code label 32. Power and control circuitry 28 may be connected to electronics 24 through one or more cables 34 and need not be in the scanner housing.

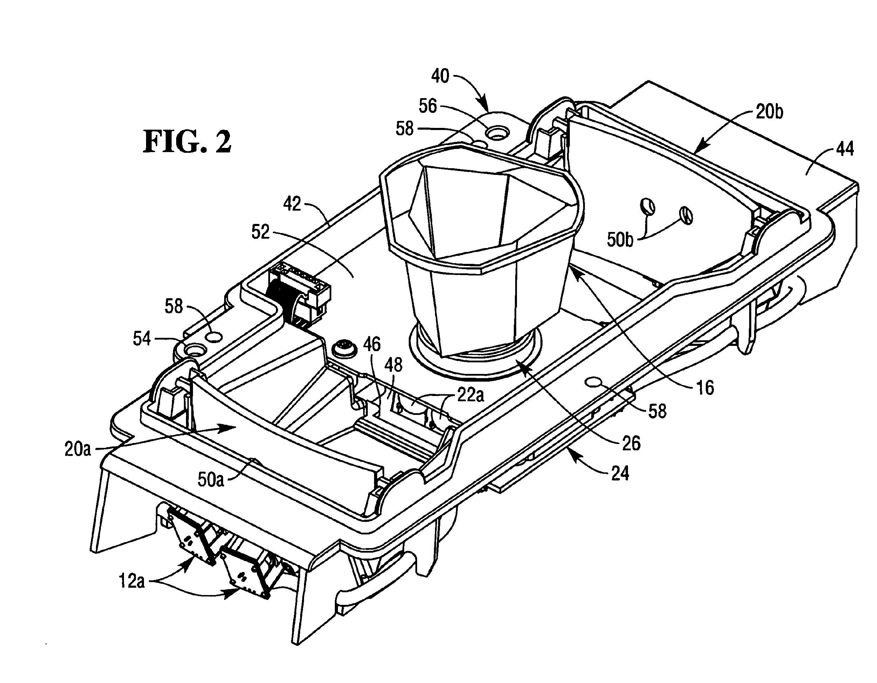

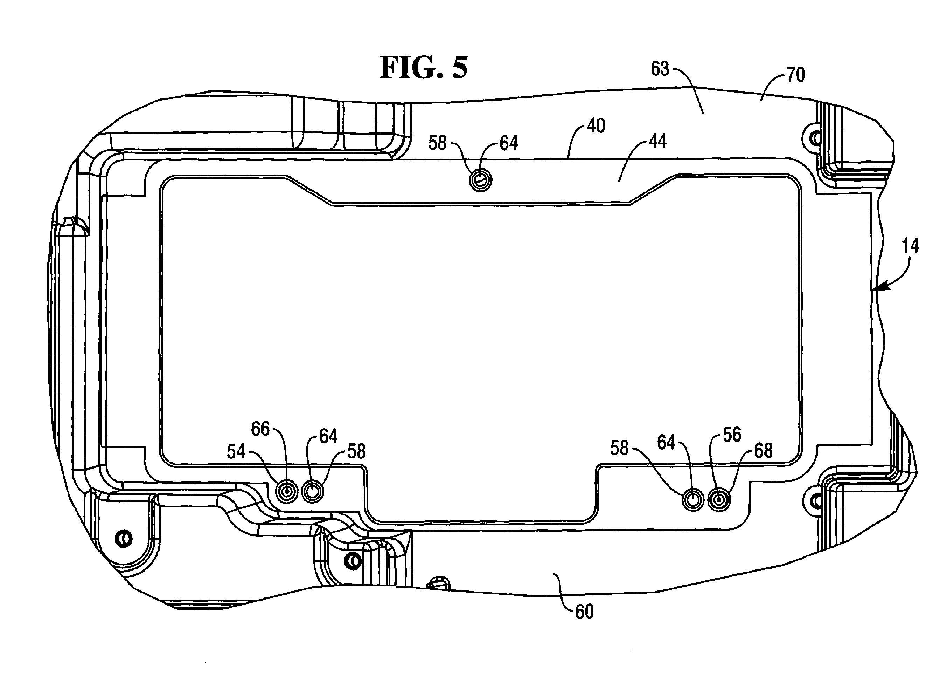

With reference to Figs. 2-6, an example embodiment of optics engine 14 for use in a dual aperture scanner is illustrated in more detail. In this example embodiment, optics engine 14 is for use in a dual-aperture scanner, although, optics engine 14 may alternatively be used in a single-aperture scanner. In fact, a single type of optics engine 14 may be used in different scanners having distinct pattern mirror arrangements.

Optics engine 14 includes housing 40, which supports mounting of laser 12, mirrored spinner 16, motor 26, collector 20, detector 22, and electronics 24.

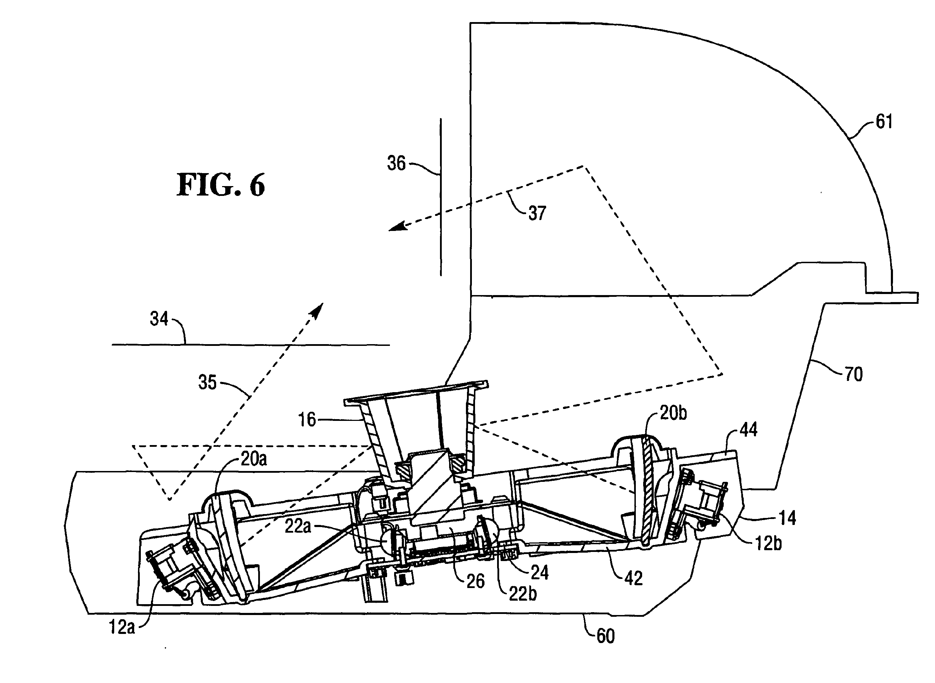

In this example, housing 40 is generally rectangular in shape and can accommodate up to four lasers 12, two collectors 20, and four detectors 22. Lasers 12a, collector 20a, and detectors 22a are associated with a first aperture 34 (Fig. 6) of the dual-aperture scanner 10. Lasers 12b, collector 20b, and detectors 22b are associated with a second aperture 36 of the dual-aperture scanner. Thus, lasers 12a produce laser beams which pass through apertures 50a in collector 20a to directly strike mirrored spinner 16 from one side of housing 40 to produce scanning beams which strike a first set of pattern mirrors 18 in scanner housing 70 (Fig. 6) and result in a first set of scan lines 35 that emanate from the first aperture 34. Light reflected from item 30 returns through the first aperture and strikes collector 20a, which directs the reflected light towards detectors 22a. Similarly, lasers 12b produce laser beams which pass through apertures 50b in collector 20b to directly strike mirrored spinner 16 from the other side of housing 40 to produce scanning beams which strike a second set of pattern mirrors 18, some within base 60 of scanner housing 70 and some within a tower 61 mounted to base 60 and result in a second set of scan lines 37 that emanate from the second aperture 36. Light reflected from item 30 returns through the second aperture and strikes collector 20b, which directs the reflected light towards detectors 22b.

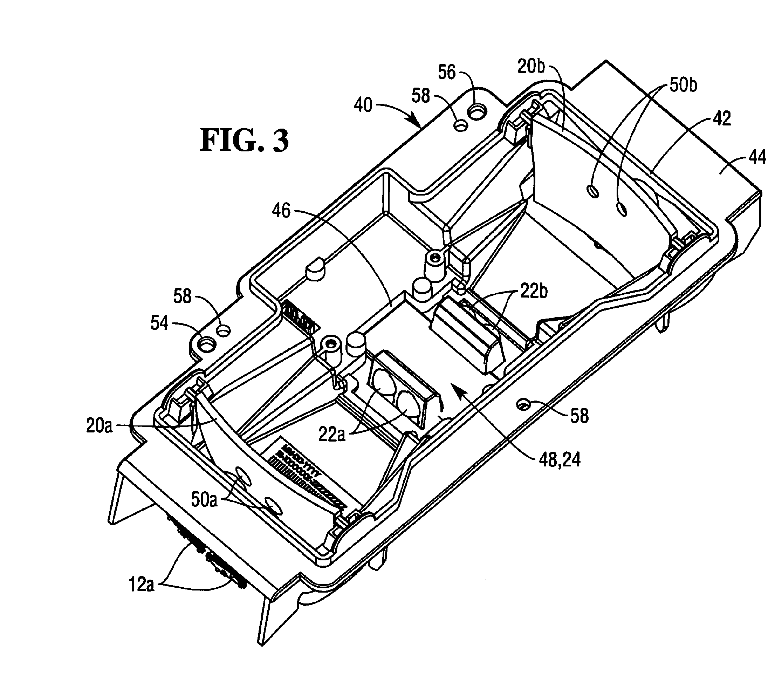

Housing 40 includes well section 42 and frame 44. Well section 42 contains a recess with a centrally located aperture 46 at the bottom. Lasers 12a and 12b extend through apertures in opposite ends of well section 42. Collectors 20a and 20b are mounted at the opposite ends with apertures 50a and 50b adjacent to their respective lasers 12a and 12b. A first printed circuit board 48 (Fig. 3) containing detectors 22a and 22b and electronics 24 fastens over aperture from below, with detectors 22a and 22b extending upwardly into well section 42. A second printed circuit board 52 (Fig. 2)containing motor 26 fastens to well section 42 above first printed circuit board 48. Mirrored spinner 16 mounts to motor 26 in the center of well section 42.

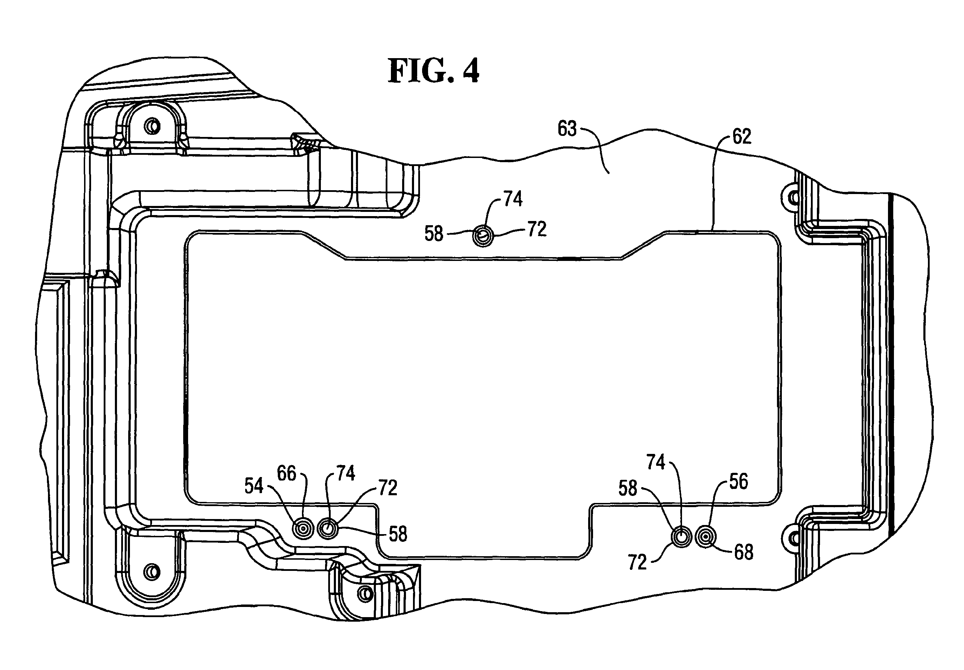

With reference to Figs. 4-6, frame 44 surrounds well section 42. Frame 44 includes mounting holes 54, 56, and 58 for aligning and fastening housing 40 to bottom surface 63 of scanner 10.

Optics engine 14 mounts within aperture 62 in bottom surface 63 of scanner housing 70. Aperture 62 is roughly the same shape as the perimeter of well section 42.

Bottom surface 63 of scanner housing 70 includes aligning pads 72 and aligning pins 66 and 68. Aligning pads 72 establish a planar reference for installing optics engine 14. By approximating three point contacts, aligning pads 72 minimize rocking of housing 40.

Aligning pin 66 establishes an origin of rotation.

Aligning pin 68 establishes a point of rotation about the origin.

Bottom surface 63 also includes screw holes 74 for receiving screws 64 through holes 58 in housing 40. Screws 64 fasten optics engine 14 to housing 70.

To locate a solid part like housing 40 takes up to six constraints. Pressing housing 40 onto aligning pads 72 provides three constraints for limiting motion in a first direction. Inserting aligning pin 66 into corresponding hole 54 provides fourth and fifth constraints for limiting motion in second and third directions. Aligning pin 66 is inserted into hole 54 with only a small clearance. Inserting aligning pin 68 into hole 56 provides a sixth constraint for limiting motion in the third direction. Hole 54 may be round and hole 56 may be slotted.

There is very little clearance orthogonal to a line between aligning pins 66 and 68, but more parallel to this line. This allows the parts to mate even if the pin to pin and hole to hole distances don't quite match.

Optics engine 14 may be easily replaced with another optics engine 14. The replacement optics engine 14 is aligned in a similar fashion, simplifying scanner repairs and avoiding costly optics aligning procedures.

Although particular reference has been made to certain embodiments, variations and modifications are also envisioned within the scope of the following claims.

## Claims

1. An optical scanner comprising:
a scanner housing including a scanner housing aperture;
pattern mirrors in the scanner housing;
an optics engine including
an engine housing insertable and removable from the scanner housing aperture;
a mirrored spinner in the engine housing for directing first and second sets of laser beams at the pattern mirrors and for receiving first and second sets of light reflected from an item from the pattern mirrors;
a motor in the engine housing for rotating the mirrored spinner;
a first set of one or more lasers in the engine housing for producing the first set of laser beams;
a second set of one or more lasers in the engine housing for producing the second set of laser beams;
a first collector in the engine housing between the first set of lasers and the mirrored spinner including a first set of apertures for each of the first set of lasers through which the first set of laser beam passes, wherein the first collector receives the first set of light reflected from the item from the mirrored spinner;
a second collector in the engine housing between the second set of lasers and the mirrored spinner including a second set of apertures for each of the second set of lasers through which the second set of laser beam passes, wherein the second collector receives the second set of light reflected from the item from the mirrored spinner;
a first set of one or more detectors in the engine housing for receiving the first set of light from the first collector and converting the first set of light into a first set of electrical signals; and
a second set of one or more detectors in the engine housing for receiving the second set of light from the second collector and converting the second set of light into a second set of electrical signals; and
decoding circuitry for obtaining barcode information from the first and second sets of electrical signals.

2. A scanner as claimed in claim 1, wherein the mirrored spinner is centrally located in the engine housing.

3. A scanner as claimed in claim 2, wherein the engine housing has first and second opposite ends and the first and second sets of lasers are located at the first and second ends.

4. A scanner as claimed in claim 3, wherein the first collector is located between the first set of lasers and the mirrored spinner and the second collector is located between the second set of lasers and the mirrored spinner.

5. A scanner as claimed in claim 4, wherein the first set of detectors is located below the mirrored spinner and facing the first collector and the second set of detectors is located below the mirrored spinner and facing the second collector.

6. A scanner as claimed in claim 5, further comprising a printed circuit board mounted below the mirrored spinner and containing the motor, the first and second sets of detectors, and control circuitry for controlling the operation of the first and second sets of lasers and the motor.

7. A scanner as claimed in any preceding claim, wherein the first and second sets of lasers each include two lasers.

8. A scanner as claimed in any preceding claim, wherein the first and second sets of detectors each include two detectors.

9. A scanner as claimed in any preceding claim, wherein the pattern mirrors include a first set of pattern mirrors that produce a first set of scanning light beams from the first set of laser beams and a second set of pattern mirrors that produce a second set of scanning light beams from the second set of laser beams.

10. A scanner as claimed in claim 9, further comprising a substantially horizontal window through which the first set of scanning light beams pass and a substantially vertical window through which the second set of scanning light beams pass.

11. A scanner as claimed in any preceding claim, wherein the scanner housing and the engine include aligning elements for aligning the optics engine during installation in the scanner housing aperture.

12. A scanner as claimed in claim 11, wherein the aligning elements include aligning pads around the scanner housing aperture for aligning the optics engine in a plane.

13. A scanner as claimed in claim 12, wherein the aligning elements further include aligning pins on the scanner housing and aligning apertures in the optics engine through which the aligning pins pass for aligning the optics engine along a direction in the plane.
